Europäisches Patentamt

European Patent Office

Office européen des brevets

(19)

(11) Veröffentlichungsnummer: **0 283 572 B1**

(12) **EUROPÄISCHE PATENTSCHRIFT**

(45) Veröffentlichungstag der Patentschrift: **08.04.92**

(51) Int. Cl.⁵: **G21F 9/16**

(21) Anmeldenummer: **87118206.9**

(22) Anmeldetag: **09.12.87**

(54) **Verfahren zur Herstellung eines geeigneten zementhaltigen Festproduktes zur Einlagerung tritiumhaltiger Wässer in einem begehbaren Endlager.**

(30) Priorität: **17.12.86 DE 3642975**

(43) Veröffentlichungstag der Anmeldung:
**28.09.88 Patentblatt 88/39**

(45) Bekanntmachung des Hinweises auf die
Patenterteilung:
**08.04.92 Patentblatt 92/15**

(84) Benannte Vertragsstaaten:
**BE CH DE FR GB LI SE**

(56) Entgegenhaltungen:
**DE-A- 2 421 142**
**FR-A- 2 455 341**
**US-A- 4 379 081**

(73) Patentinhaber: **Deutsche Gesellschaft für Wiederaufarbeitung von Kernbrennstoffen mbH
Hamburger Allee 4 Postfach 1407
W-3000 Hannover 1(DE)**

Patentinhaber: **Battelle-Institut e.V.
Am Römerhof 35 Postfach 900 160
W-6000 Frankfurt/Main 90(DE)**

(72) Erfinder: **Kunz, Wilfried, Dr.
Ossietzkyring 14
W-3000 Hannover 91(DE)**
Erfinder: **Gramatte, Winfried
Berstädter Strasse 24
W-6366 Wölfersheim(DE)**
Erfinder: **Schmitt, Rolf-Erhard, Dr.
Rheinstrasse 86
W-6506 Nackenheim(DE)**
Erfinder: **Pohl, Udo, Dr.
Ulmenstrasse 36
W-6238 Hofheim(DE)**

EP 0 283 572 B1

**Beschreibung**

Die Erfindung betrifft ein Verfahren zur Herstellung eines zementhaltigen Festproduktes zur Endlagerung tritiumhaltiger Wässer in begehbaren Endlagern unter Mischung des Wassers mit Zement und Bentonit, wobei das tritiumhaltige Wasser mit quellfähigem Bentonit zur Herstellung einer Wasser-Bentonit-Suspension vermischt wird, welcher Zement zugegeben wird.

Die DE-PS 29 17 060 beschreibt ein Verfahren zur Verfestigung von tritiumhaltigem Wasser. Als Randbedingung gilt hier für das auszuhärtende Produkt eine Mindestdichte von 1,3 g/cm³. Basis der dort verwendeten Rezeptur ist wiederum eine Mischung zwischen Zement, Bentonit und tritiumhaltigem Wasser. Das beschriebene Verfahren bzw. das Produkt bezieht sich auf Laborversuche.

Es wurde auch versucht, auf der Basis der Rezeptur der erwähnten DE-PS 29 17 060 ein Produkt zur Endlagerung von tritiumhaltigen Wasser herzustellen. Bei der Überführung dieser im Labor erzeugten Mischungen in den halbtechnischen Maßstab (Technikumsversuche und in dem technischen Maßstab 1:1) zeigte sich aber, daß die Endlagerung der tritiumhaltigen Wässer nicht möglich ist, weil die an Großcontainer mit Inhalten von ca. 8 m³ gestellten Anforderungen (festes Produkt, möglichst hoher Wassergehalt und kein überstehendes Wasser) nicht erfüllt wurden. Alle hergestellten Großproben mit mehr als 60 Gew.-% Wassergehalt wiesen vielmehr während und nach dem Aushärten Überstandswasser auf. Eine derartige Erscheinung ist für die Endlagerung in einem Endlagerbergwerk laut Genehmigungsbehörde nicht zulässig.

Wassergehalte unter 60 % sind andererseits aufgrund wirtschaftlicher Überlegungen nicht rentabel.

Der Erfindung liegt die Aufgabe zugrunde, eine Verfahren der eingangs genannten Art zu schaffen, mit dem ein endlagerungsfähiges, zementhaltiges Festprodukt hergestellt werden kann, welches einen höheren Wassergehalt aufweist, ohne daß die Gefahr von Überstandswasser besteht.

Zur Lösung dieser Aufgabe ist das Verfahren gemäß der Erfindung gekennzeichnet, wie angegeben in Anspruch 1.

Bei der erfindungsgemäßen Verfahrensführung wird aktivierter quellfähiger Bentonit genommen. Bei aktiviertem Bentonit sind die im Kristallgitter eingebauten Erdalkali-Ionen größtenteils durch Natrium-Ionen ersetzt. Dieses kann durch eine chemische Behandlung erreicht werden.

Der Bentonit wird mit dem tritiumhaltigen Wasser unter Einwirkung hoher Scherkräfte dispergierend vermischt und damit aufgeschlossen. Durch die Scherkräfte werden die Kornaggregate des Bentonits weitgehend mechanisch zerschlagen. Die derart aufgeschlossene Suspension wird anschließend dem Quellvorgang unterworfen. Die so erhaltene Suspension wird mit dem Zement vermischt. Gemäß der Erfindung wird aktiviertes Na-Bentonit in Kombination mit Zement niedriges Calcium-Kozentration verwendet. Dadurch wird eine Deaktivierung des Bentonits vermieden.

Diese Verfahrensführung ermöglicht vorteilhafterweise die Herstellung eines Produktes mit etwa 85 bis 90 Gew.-% Wassergehalt ohne daß Überstandswasser festgestellt wurde.

In vorteilhafter Ausgestaltung der Erfindung wird das tritiumhaltige Wasser mit dem Bentonit in einem Massenverhältnis von etwa 10:1 bis etwa 20:1, vorzugsweise von etwa 12,5:1 dispergierend vermischt. Dieses Verhältnis ist höher als beim geschilderten Stand der Technik.

Bei einer diskontinuierlichen Verfahrensführung wird die Wasser-Bentonit-Suspension in einem Quellbehälter dem Quellvorgang unterworfen. Hierzu ist es vorteilhaft, die Suspension in dem Quellbehälter umzuwälzen. Bei einer kontinuierlichen Verfahrensführung durchläuft die Abwasser-Bentonit-Suspension eine Verweilstrecke, die eine Verweilzeit von wenigstens 10 Minuten bewirkt. Dadurch wird eine ausreichende Bentonit-Quellung erreicht.

In weiterer vorteilhafter Ausgestaltung der Erfindung wird die gequollene Suspension mit dem Zement unter Einwirkung hoher Scherkräfte dispergierend vermischt, wodurch ein zusätzlicher Aufschluß der Suspension und eine verbesserte Homogenisierung des Festproduktes erreicht wird.

Das noch fließfähige Produkt kann zur Lagerung in einen gasdichten Behälter eingefüllt werden. Ohne zusätzliche technische Hilfsmittel kann ein Verfüllungsgrad von mindestens 92 Vol.-% erreicht werden. Da kein Überstandswasser ansteht, können die heutigen behördlichen Vorschriften für die Endlagerung in ein begehbares Endlager erfüllt werden.

Die Erfindung wird im folgenden anhand von Ausführungsbeispielen näher erläutert, aus denen sich weitere wichtige Merkmale ergeben. Es zeigt:

Fig. 1 ein Verfahrensschema zur diskontinuierlichen Herstellung eines Bentonit-Zement-Wassergemisches zur Endlagerung tritiumhaltiger Wässer in begehbaren Endlagern;

Fig. 2 ein Verfahrensschema zur kontinuierlichen Herstellung eines Bentonit-Zement-Wassergemisches zur Endlagerung tritiumhaltiger Wässer in begehbaren Endlagern.

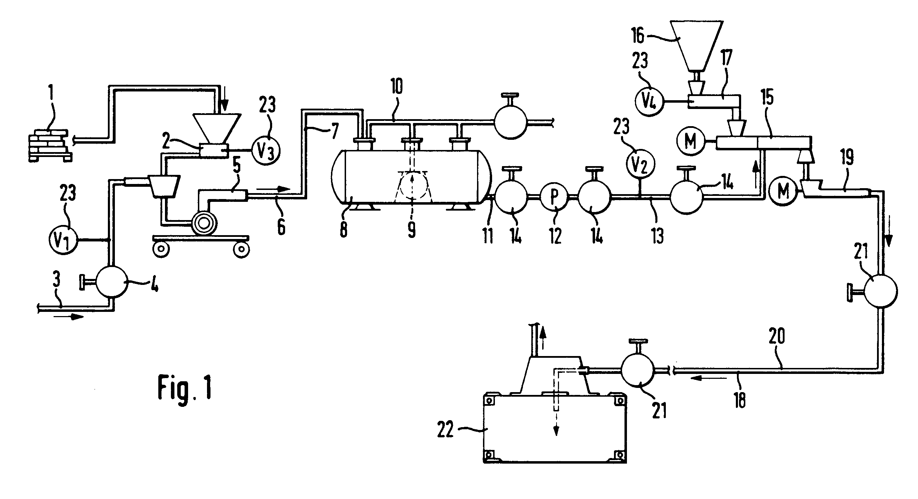

Gemäß Fig. 1 werden die beiden Stoffströme, nämlich Bentonit 1 über eine Feststoffdosierung 2 und radioaktives Wasser 3 über ein Regelventil 4 in einer Dispergierpumpe 5, die hohe Scherkräfte einbringt, vermischt. Eine so erzeugte Bentonit-Wasser-Suspension 6 wird von einer Dispergierpumpe 5 über eine Rohrleitung 7 in einen Quellbehälter 8 gefördert. Im Quellbehälter 8 verbleibt die Suspension 6 zur optimalen Wasseraufnahme des Bentonit zwischen 5 und 25 Stunden. Zur besseren Handhabung der thixotropen Suspension 6 ist eine Umwälzung mit einer Umwälzpumpe 9 über eine Umwälzleitung 10 vorgesehen.

Die Ausführungsart des Quellbehälters und des Umwälzvorgangs ist beliebig und bleibt den anlagespezifischen Randbedingungen und einer Verfahrensoptimierung vorbehalten. Als Alternative wäre z. B. ein stehender zylindrischer Behälter mit einem Rührwerk denkbar. Nach der erforderlichen Quellzeit wird die Bentonit-Suspension 11 mit Hilfe einer Schlauchpumpe 12 als Dosierpumpe über eine Rohrleitung 13 mit entsprechenden Rohrleitungsarmaturen 14 zu einer Misch einrichtung 15 gefördert. In diese Mischeinrichtung 15 wird der ausgequollenen Bentonit-Suspension über eine Dosiereinrichtung 17 Zement 16 beigemischt. Als Mischeinrichtung sind alle Trocken-Naß-Mischsysteme geeignet, die eine optimale Vermischung der beiden Komponenten Bentonit-Suspension und Zement gewährleisten, wie z. B. Schneckenmischer, Dispergierpumpe.

Das fertig gemischte Produkt 18 wird mit Hilfe einer Feststoffpumpe 19 über eine Rohrleitung 20 mit Armaturen 21 in einen Endlagerbehälter 22 zum Aushärten gefördert. Der Endlagerbehälter ist nach Verschweißen der Befüllungsöffnung gasdicht. Die gezeigten Meßstellen 23 ermöglichen eine Bilanzierung der Massenströme.

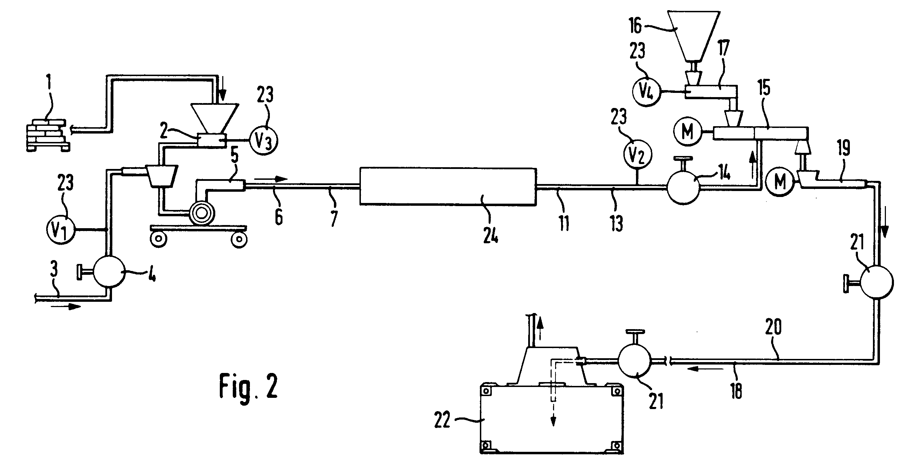

Fig. 2 zeigt ein Verfahrensschema mit kontinuierlicher Verfahrensführung. Der bei dem diskontinuierlichen Verfahren benutzte Quellbehälter 8 sowie die Armaturen 9,10,12,14 (siehe Fig. 1) werden dabei durch eine Verweilstrecke 24 ersetzt. Durch Versuche wurde festgestellt, daß eine Verweilzeit in der Verweilzeitstrecke von größer als 10 Minuten die Eigenschaften der gequollenen Bentonit-Suspension 11 so weit verändert, daß beim Endprodukt 18 nach dem Abbinden keir Überstandswasser auftritt. Die kürzere Quellzeit bedingt eine verlängerte Abbindezeit des Produktes.

Während einer sechswöchigen Versuchsphase wurden mit beiden Verfahren reproduzierbare Produkte erstellt, die einen Wassergehalt von bis zu 90 Gew.-% hatten, ohne daß nach dem Abbinden Überstandswasser auftrat.

Bei Produkten mit 85 % Wasseranteil entsprechend einem Volumenanteil von 93,5 % wurden auf 1000 l Wasser 80 kg aktivierter Bentonit und 95 kg Hochofen-Zement HOZ 35L-NW-HS (DIN) eingemischt. Ein standardisierter Endlagerbehälter mit Nettovolumen von 7 m³ wurde zu 92 % mit dem Produkt verfüllt.

## Patentansprüche

1. Verfahren zur Herstellung eines zementhaltigen Festproduktes zur Endlagerung tritiumhaltiger Wässer in begehbaren Endlagern unter Mischung des Wassers mit Zement und Bentonit, wobei das tritiumhaltige Wasser mit quellfähigem Bentonit zur Herstellung einer Wasser-Bentonit-Suspension vermischt wird, welcher Zement zugegeben wird,
dadurch gekennzeichnet,
daß aktivierter quellfähiger Bentonit, in dem die im Kristallgitter eingebauten Erdalkali-Ionen größtenteils durch Na-Ionen ersetzt sind, verwendet wird, mit dem tritiumhaltigen Wasser unter Einwirkung hoher Scherkräfte dispergierend vermischt wird und die dabei gewonnene Suspension einem Quellvorgang zur optimalen Wasseraufnahme des aktivierten Bentonits unterworfen wird, bevor der Zement zugegeben wird, der nur geringe Mengen an Calcium enthält und nur geringe Mengen von Calcium-Ionen freisetzt.

2. Verfahren nach Anspruch 1,
dadurch gekennzeichnet,
daß das tritiumhaltige Wasser (3) mit dem aktivierten Na-Bentonit (1) in einem Masseverhältnis von etwa 10 : 1 bis etwa 20 : 1, vorzugsweise von etwa 12,5 : 1 dispergierend vermischt wird.

3. Verfahren nach Anspruch 1 oder 2, dadurch gekennzeichnet, daß die Wasser-Bentonit Suspension (6) in einem Quellbehälter (8), dem Quellvorgang unterworfen wird.

4. Verfahren nach Anspruch 3, dadurch gekennzeichnet, daß die Suspension (6) in dem Quellbehälter (8) umgewälzt wird.

5. Verfahren nach Anspruch 1 oder 2, dadurch gekennzeichnet, daß die Wasser-Bentonit-Suspension (6) während eines kontinuierlichen Durchflusses eine Verweilstrecke (24) durchläuft, die eine Verweilzeit von wenigstens 10 Minuten bewirkt.

6. Verfahren nach einem der Ansprüche 1 bis 5, dadurch gekennzeichnet, daß die gequollene Suspension unter Einwirkung hoher Scherkräfte mit dem Zement dispergierend vermischt wird.

7. Quellfähiges, zementhaltiges Festprodukt aus Zement und aktiviertem, quellfähigem Bentonit mit einem Gehalt an tritiumhaltigem Wasser von über 75 Gew.-% vorzugsweise von etwa 85 bis 90 Gew.-% hergestellt nach dem Verfahren nach einem der Ansprüche 1 bis 6.

## Claims

1. A process for the production of a cement-bearing solid product for the terminal storage of tritium-bearing waters in terminal storage means which are negotiable on foot, involving mixing the water with cement and bentonite, wherein the tritium-bearing water is mixed with swellable bentonite to produce a water-bentonite suspension to which cement is added, characterised in that activated swellable bentonite in which the alkaline earth ions incorporated in the crystal lattice are replaced for the major part by Na-ions is used, and mixed with the tritium-bearing water in a dispersing condition under the effect of high shearing forces, and the suspension obtained in that way is subjected to a swelling operation for the optimum absorption of water by the activated bentonite before addition of the cement which contains only small amounts of calcium and which liberates only small amounts of calcium ions.

2. A process according to claim 1 characterised in that the tritium-bearing water (3) is mixed in a dispersing condition with the activated Na-bentonite (1) in a mass ratio of about 10:1 to about 20:1, preferably about 12.5:1.

3. A process according to claim 1 or claim 2 characterised in that the water-bentonite suspension (6) is subjected to the swelling operation in a swelling container (8).

4. A process according to claim 3 characterised in that the suspension (6) is circulated in the swelling container (8).

5. A process according to claim 1 or claim 2 characterised in that, during a continuous through-flow, the water-bentonite suspension (6) passes through a residence section (24) which provides a residence time of at least 10 minutes.

6. A process according to one of claims 1 to 5 characterised in that the swollen suspension is mixed with the cement in a dispersing condition under the effect of high shearing forces.

7. A swellable cement-bearing solid product of cement and activated swellable bentonite with a content of tritium-bearing water of over 75% by weight, preferably from about 85 to 90% by weight, which is produced by the process according to one of claims 1 to 6.

## Revendications

1. Procédé de fabrication d'un produit solide contenant du ciment pour le stockage des eaux tritiées dans un dépôt définitif accessible, en mélangeant de l'eau à du ciment et à de la bentonite, l'eau tritiée étant mélangée à de la bentonite susceptible de gonfler pour préparer une suspension eau-bentonite, à laquelle est ajouté du ciment,
   caractérisé,
   en ce qu'il consiste à utiliser de la bentonite activée et susceptible de gonfler dans laquelle les ions de métaux alcalino-terreux insérés dans le réseau cristallin sont remplacés pour la plus grande partie par des ions Na, à la mélanger avec dispersion à l'eau tritiée sous l'action de grandes forces de cisaillement, et à soumettre la suspension obtenue à un processus de gonflement pour que la bentonite activée absorbe l'eau de manière optimum, avant d'ajouter le ciment qui ne contient que de faibles quantités de calcium et qui ne libère que de faibles quantités d'ions calcium.

2. Procédé suivant la revendication 1,
   caractérisé,
   en ce qu'il consiste à mélanger avec dispersion l'eau tritiée (3) à la bentonite de sodium (1) activée en un rapport en poids de 10:1 à 20:1 environ et, de préférence, de 12,5:1 environ.

3. Procédé suivant la revendication 1 ou 2, caractérisé en ce qu'il consiste à soumettre la suspension (6) eau-bentonite dans un récipient de gonflement (8) à un processus de gonflement.

4. Procédé suivant la revendication 3, caractérisé en ce qu'il consiste à faire recirculer la suspension (6) dans la cuve de gonflement (8).

5. Procédé suivant la revendication 1 ou 2, caractérisé en ce qu'il consiste à faire passer la suspension (6) eau-bentonite en un passage continu dans une zone de séjour (24) qui donne une durée de séjour d'au moins 10 minutes.

6. Procédé suivant l'une des revendications 1 à 5, caractérisé en ce qu'il consiste à mélanger avec dispersion la suspension gonflée au ciment sous l'action de fortes forces de cisaillement.

7.  Produit solide susceptible de gonfler et contenant du ciment, constitué de ciment et d'une
    bentonite activée susceptible de gonfler, ayant
    une teneur en eau tritiée supérieure à 75 % en
    poids et, de préférence, de 85 à 90 % en
    poids environ, fabriqué par le procédé suivant
    l'une des revendications 1 à 6.

Fig. 1

Fig. 2